# EUROPEAN PATENT SPECIFICATION

(11) **EP 1 326 022 B1**
(45) Date of publication and mention of the grant of the patent: **07.06.2006**
(21) Application number: 01974830.0
(22) Date of filing: 12.10.2001
(51) Int. Cl.: F02M 61/16, F16J 15/10, F02F 11/00, F02M 61/14

(54) **COMBUSTION GAS SEAL FOR INJECTOR**
VERBRENNUNGSGASDICHTUNG FÜR EINSPRITZDÜSE
SCELLEMENT DE GAZ DE COMBUSTION, DESTINE A UN INJECTEUR

(30) Priority: 13.10.2000 JP 2000313891; 30.10.2000 JP 2000331083; 02.07.2001 JP 2001201288
(43) Date of publication of application: 09.07.2003
(73) Proprietor: NOK CORPORATION, Tokyo 105-8585 (JP)
(72) Inventor: NAKAYAMA, Junichi, c/o NOK CORPORATION, Fujisawa-shi, Kanagawa 251-0042 (JP); KAWABATA, Masahiro, c/o NOK CORPORATION, Nihonmatsu-shi, Fukushima 964-0811 (JP)
(74) Representative: TBK-Patent
(86) International application number: PCT/JP2001/008999
(87) International publication number: WO 2002/031354

(56) References cited:
- WO-A-02/12717
- JP-A- 2000 009 000
- JP-U- 2 114 767
- JP-U- 5 042 671
- JP-U- 6 040 365
- JP-U- 6 051 627
- JP-U- 54 037 719
- JP-U- 58 060 088
- JP-U- 59 045 276
- JP-U- 60 047 957
- JP-U- 63 063 578
- US-A- 3 244 377

## Description

### TECHNICAL FIELD

The present invention relates to a combustion gas seal for injectors, intended for prevention of leakage of a combustion gas in a state, in which an injector is mounted on a cylinder head of an engine.

### BACKGROUND ART

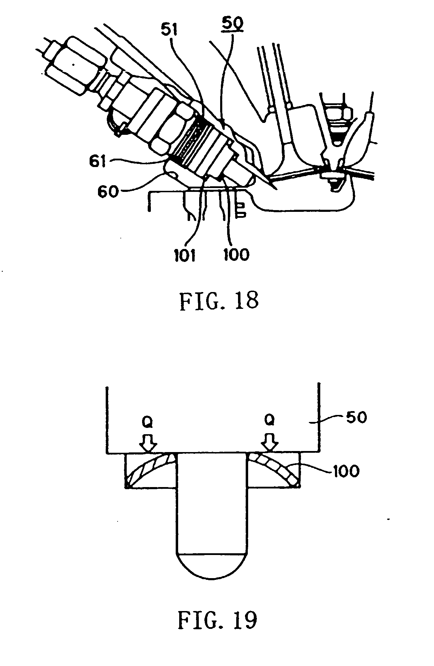

Fig. 18 is a schematic configuration showing a state, in which an injector is mounted on a cylinder head of an engine.

In the case where an injector 50 is mounted on a cylinder head 60 of an engine, it is necessary to prevent leakage of a combustion gas from a neighborhood of a mount of the injector 50.

Thus, washer-shaped seals 100, 101 are conventionally provided in two locations on the mount of the injector 50 as shown in Fig. 18 to prevent leakage of a combustion gas.

The seals 100, 101 are formed from metal such as copper, or the like, and sealing is achieved by a clamping force Q (see Fig. 19), which is obtained by a fastening force when the injector 50 is mounted on the cylinder head 60 of an engine. In addition, for example, as shown in Fig. 18, the fastening force can be obtained by screwing an external thread portion provided on the injector 50 into an internal thread portion provided on the cylinder head 60.

With the above conventional art, however, sealing of the metallic washer-shaped seals 100, 101 is achieved by utilization of the clamping force, so that vibrations caused by an engine or the like are transmitted to the seals 100, 101 to produce a large sound at the sealed portion, which is responsible for noise.

Also, load based on vibrations and heat causes reduction in the clamping force whereby a sealing performance is degraded with the passage of time.

A combustion gas seal from a resin is known from WO-A-02/12717

An object of the invention is to provide a combustion gas seal for injectors, which improves a sealing performance.

### DISCLOSURE OF THE INVENTION

To attain the above object, the invention provides a combustion gas seal for injectors according to claim 1.

With such constitution, inner and outer diameter sides of the combustion gas seal for injectors are brought into close contact with an injector and a cylinder head, respectively, without any gap therebetween, and an entire end surface thereof on a combustion gas side is exposed to the combustion gas, so that the combustion gas seal for injectors is caused by pressure applied by the combustion gas to extend toward inner and outer diameter sides, and surface pressures are further increased. Also, since the seal is formed from a resin, it is possible to prevent generation of noise.

A combustion gas is believed to be at about 180 °C, and so the seal is preferably formed from a resin material having a thermal resistance of at least 200 °C.

Thereby, while that portion, on which an injector is mounted, is put in a comparatively high temperature state, it is possible to reduce deterioration even in use at such high temperature.

Preferably, a groove is provided on an entire periphery of the end surface on the combustion gas side to be opened to the combustion gas side.

Thereby, pressures of the combustion gas apply on wall surfaces of the groove, and therefore adhesion to the injector and the cylinder head is further enhanced.

Preferably, a tapered surface is provided on an entire periphery of an inner-peripheral side end edge of the end surface on the combustion gas side.

Thereby, pressures of the combustion gas apply on the tapered surfaces whereby adhesion to an outer peripheral side (cylinder head) is further enhanced.

Preferably, a plurality of tapered surfaces disposed at circumferential intervals is provided on an inner peripheral side end edge of the end surface on the combustion gas side.

Thereby, pressures of the combustion gas apply on the tapered surfaces whereby adhesion to an outer peripheral side (cylinder head) is further enhanced. Also, those portions, on which the tapered surfaces are not provided, provide a high rigidity whereby abnormal deformation is prevented.

Preferably, inner peripheral surfaces of those portions, on which the tapered surfaces are not provided, abut against a groove bottom surface of the attachment groove.

Thereby, the inner peripheral surfaces of those portions, on which the tapered surfaces are not provided, function as stoppers whereby abnormal deformation is surely prevented.

### BRIEF DESCRIPTION OF THE DRAWINGS

Fig. 1 is a schematic, cross sectional view showing a state, in which a combustion gas seal for injectors, according to a first embodiment of the invention, is attached;
Fig. 2 is a schematic, cross sectional view showing a mating structure, on which the combustion gas seal for injectors, according to the embodiment of the invention, is mounted;
Fig. 3 is a cross sectional view showing the combustion gas seal for injectors, according to the first embodiment of the invention, with a part thereof broken away;
Fig. 4 is a partially enlarged view of Fig. 1;
Fig. 5 is a view illustrating a surface-pressure distribution;
Fig. 6 is a schematic, cross sectional view showing a state, in which a combustion gas seal for injectors, according to a second embodiment of the invention, is attached;
Fig. 7 is a schematic, cross sectional view showing a state, in which a combustion gas seal for injectors, according to a third embodiment of the invention, is attached;
Fig. 8 is a schematic, cross sectional view showing a state, in which the combustion gas seal for injectors, according to the third embodiment of the invention, is used;
Fig. 9 is a schematic, cross sectional view showing a conceivable malfunction in the combustion gas seal for injectors, according to the third embodiment of the invention;
Fig. 10 is a bottom view showing a combustion gas seal for injectors, according to a fourth embodiment of the invention;
Fig. 11 is a cross sectional view taken along the line aa' in Fig. 10;
Fig. 12 is a schematic, cross sectional view showing a mating structure, to which the combustion gas seal for injectors, according to the embodiments of the invention is mounted;
Fig. 13 is a fragmentary, perspective view showing the combustion gas seal for injectors, according to the fourth embodiment of the invention;
Fig. 14 is a schematic, cross sectional view showing the combustion gas seal for injectors, according to the fourth embodiment of the invention;
Fig. 15 is a schematic, cross sectional view showing a mount portion;
Fig. 16 is a bottom view showing an example of a modified configuration of the combustion gas seal for injectors, according to the fourth embodiment of the invention;
Fig. 17 is a cross sectional view taken along the line aa' in Fig. 16;
Fig. 18 is a schematic view showing a configuration, in which an injector is mounted on a cylinder head of an engine; and
Fig. 19 is a view illustrating a combustion gas seal for injectors, according to the conventional art.

### BEST MODE FOR CARRYING OUT THE INVENTION

Preferred embodiments of the invention will be exemplarily explained below in detail referring to the drawings. However, a scope of the invention is not to be limited only to dimensions, materials, configurations, relative arrangement, and the like of constituent parts described in the embodiments unless specifically described.

### (First embodiment)

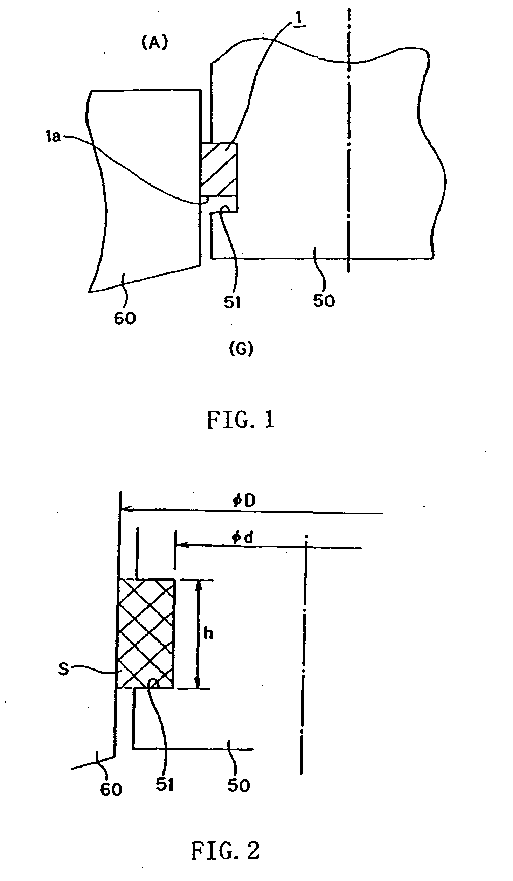

A combustion gas seal for injectors, according to a first embodiment of the invention, will be explained referring to Figs. 1 to 5.

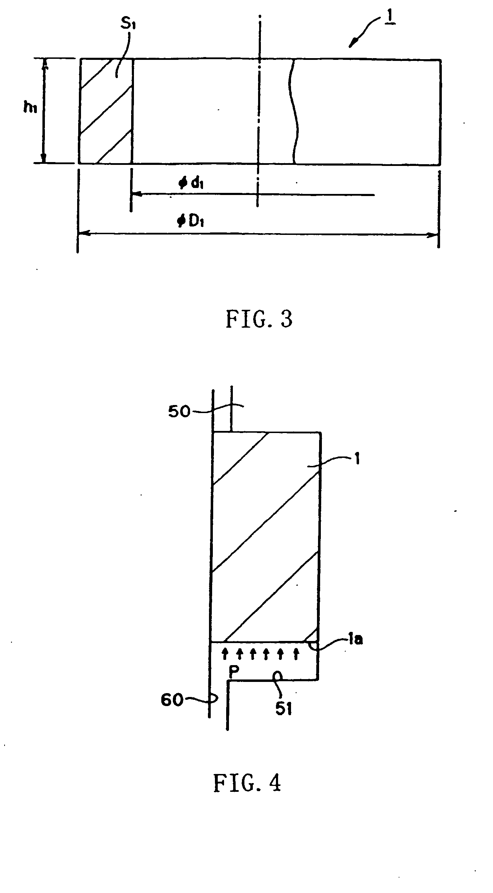

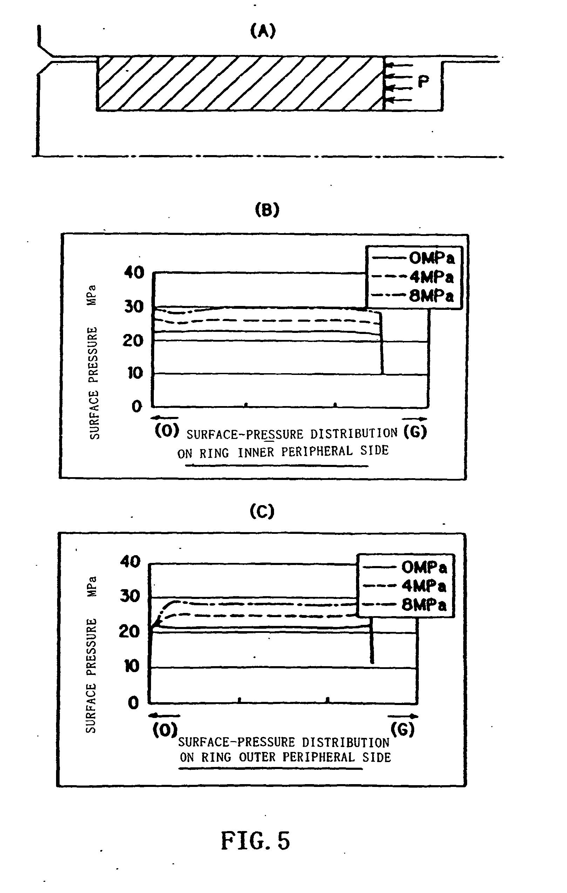

Fig. 1 is a schematic, cross sectional view showing a state, in which the combustion gas seal for injectors, according to the first embodiment of the invention, is attached. Fig. 2 is a schematic, cross sectional view showing a mating structure (a structure of an injector and a cylinder head), on which the combustion gas seal for injectors, according to the embodiment of the invention, is mounted. Fig. 3 is a cross sectional view showing the combustion gas seal for injectors, according to the first embodiment of the invention, with a part thereof broken away. Fig. 4 is a partially enlarged view of Fig. 1. Fig. 5 is a view illustrating a surface-pressure distribution.

A combustion gas seal 1 for injectors, according to the embodiment, serves to seal an annular gap between an injector 50 (outer periphery thereof) and a cylinder head 60 (inner periphery thereof) as shown in Fig. 1, and is used in a state of being attached in a attachment groove 51 provided at a tip end (outer periphery thereof) of the injector 50.

Also, the combustion gas seal 1 for injectors, according to the embodiment, is a ring-shaped member, a material for which is a resin material having a thermal resistance of at least 200 °C.

In addition, for example, pure PTFE (polytetrafluoroethylene), a resin composition composed of PTFE and fillers, or a resin material (elastomer or the like) having elasticity is preferable as the material.

And, as shown in Fig. 2, in the case where a groove bottom portion of the attachment groove 51 of the injector 50 being a portion, to which the combustion gas seal 1 for injectors is mounted, has an outer diameter ϕd, and the cylinder head 60 has an inner diameter φD, an inner diameter φd₁ and an outer diameter φD₁ of the ring-shaped combustion gas seal 1 for injectors are set to meet φD₁ > φD, φd₁ < φd.

Accordingly, irrespective of presence or absence of pressure caused by the combustion gas, the combustion gas seal 1 for injectors is attached in the attachment groove 51 in a compressed state, and its inner-diameter side and outer-diameter side, respectively, are brought into close contact with the groove bottom portion of the attachment groove 51 of the injector 50 and an inner periphery of the cylinder head 60.

Also, an axial length h₁ (see Fig. 3) of the combustion gas seal 1 for injectors is set to be always smaller (h₁ < h) than a groove width h of the attachment groove 51 of the injector 50.

More specifically, even in the case of taking account of dimensional tolerances and thermal expansion of respective members, a dimension of h₁ is set so that the relationship between a cross sectional area S (see Fig. 2) of a portion defined by the attachment groove 51 of the injector 50 and a cross sectional area S₁ (see Fig. 3) of the combustion gas seal 1 for injectors is in the level of S₁ = 0.9 S.

Accordingly, the entire of an end surface (referred below to as combustion gas side end surface 1a) on a combustion gas side (G) (bore head side) of the combustion gas seal 1 for injectors is exposed to a combustion gas as shown in Fig. 1 or 4.

Thereby, the entire of the combustion gas side end surface 1a is acted by pressure of a combustion gas, so that the combustion gas seal 1 for injectors is subjected to an adequate compressive stress to extend toward inner and outer peripheral sides, whereby surface pressures on the groove bottom portion of the attachment groove 51 of the injector 50 and the inner periphery of the cylinder head 60, respectively, are increased.

That is, a self-sealing function is exhibited.

Fig. 5 is views illustrating changes in combustion gas pressure and surface pressure, (A) being a view showing a model when FEM analysis is made, (B) showing results of the FEM analysis illustrating a surface-pressure distribution on the inner peripheral side, and (C) showing results of the FEM analysis illustrating a surface-pressure distribution on the outer peripheral side.

As apparent from the figure, it is seen that the higher pressure of a combustion gas, the higher surface pressure on the inner and outer peripheral sides.

Here, even when a seal (resin ring, or the like) formed from a resin material is compressively attached in an initial stage (stage of design) to possess a sealing performance, its reaction force is generally decreased due to the creep phenomenon with the passage of time.

With the combustion gas seal 1 for injectors, according to the embodiment, however, the self-sealing function is exhibited as described above, so that a stable sealing performance is exhibited over a long term.

As described above, since the combustion gas seal for injectors, according to the embodiment, is formed from a resin material, it produces no noise even when vibrations are transmitted, so that it is possible to improve the sound insulation effect. Also, it is possible to maintain a stable sealing performance over a long term.

### (Second embodiment)

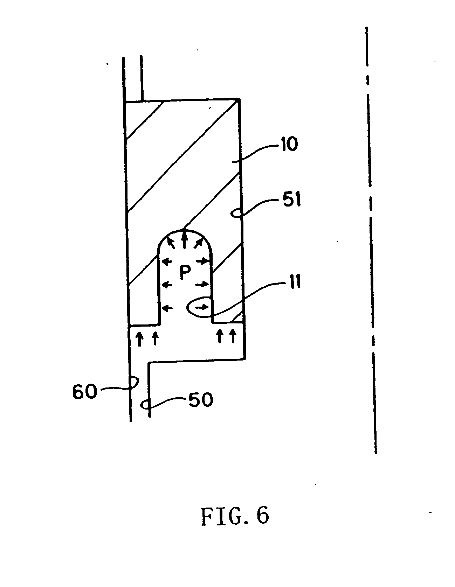

Fig. 6 shows a second embodiment. An explanation will be given to a constitution of the embodiment in the case where a U-shaped groove is provided on the combustion gas side end surface.

Since the other constitution and effect are the same as those in the first embodiment, the same characters denote the same constituents and an explanation therefor is omitted.

Fig. 6 is a schematic, cross sectional view showing a state, in which a combustion gas seal for injectors, according to the second embodiment of the invention, is attached.

In the embodiment, a U-shaped groove 11 opened toward the combustion gas side is provided over an entire periphery of a combustion gas side end surface of a combustion gas seal 10 for injectors.

Thereby, since pressure of a combustion gas acts on wall surfaces of the groove, surface pressures on the groove bottom portion of the attachment groove 51 of the injector 50 and the inner peripheral surface of the cylinder head 60, respectively, can be further increased.

Accordingly, it is possible to achieve further improvement of the sealing performance.

In addition, while the groove having a U-shaped cross section is exemplified in the example as shown, such cross section is not limited to a U-shape but it goes without saying that a similar effect can be produced even when such cross section is shaped otherwise (for example, rectangular, circular, polygonal, or the like).

### (Third embodiment)

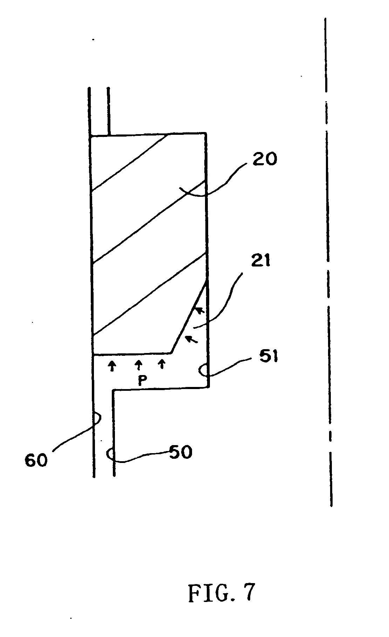

Fig. 7 shows a third embodiment. An explanation will be given to a constitution of the embodiment in the case where a tapered surface is provided on a periphery of an inner-peripheral side end edge of the end surface on the combustion gas side.

Since the other constitution and function are the same as those in the first embodiment, the same characters denote the same constituents and an explanation therefor is omitted.

Fig. 7 is a schematic, cross sectional view showing a state, in which a combustion gas seal for injectors, according to the third embodiment of the invention, is attached.

In the embodiment, a tapered surface 21 is provided on an entire periphery of an inner-peripheral side end edge of the end surface on the combustion gas side of a combustion gas seal 20 for injectors.

Thereby, since pressure of a combustion gas acts on the tapered surface 21, component forces toward an outer peripheral side is generated and a surface pressure on the inner peripheral surface of the cylinder head 60 can be further increased.

That is, a reaction force of the resin ring is decreased due to the creep phenomenon with the passage of time, as described above. Specifically, when used at low temperatures, a gap is liable to be generated on an outer diameter side due to thermal contraction.

In contrast, since the surface pressure on the inner peripheral surface of the cylinder head 60 on the outer peripheral surface side can be increased in the embodiment as described above, a stable sealing performance can be maintained.

In addition, while the same effect is also produced in the second embodiment, formation of the tapered surface on the end in the embodiment is easier in terms of workability than formation of the U-shaped groove as in the second embodiment, and is effective specifically in the case of a gas seal having small dimensions.

### (Fourth embodiment)

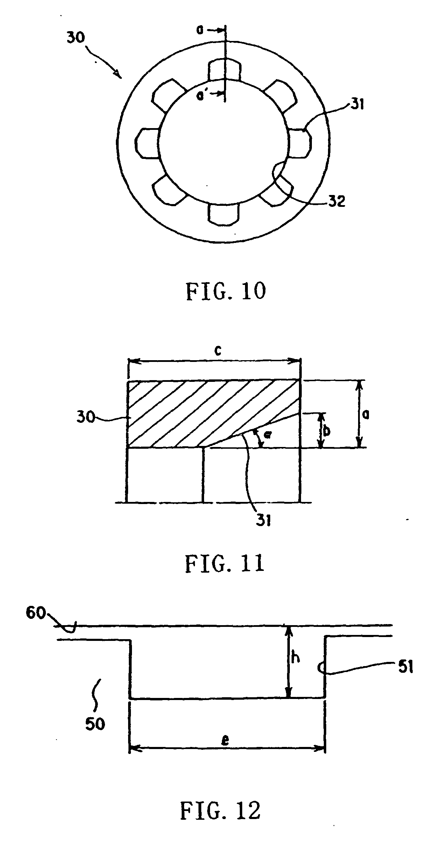

Figs. 10 to 17 shows a fourth embodiment. While the constitution of the third embodiment is shown, in which the tapered surface is provided on an entire periphery of an inner-peripheral side end edge of the end surface on the combustion gas side, an explanation will be given to a constitution of the embodiment, in which a plurality of tapered surfaces are provided at intervals in the circumferential direction of the end edge of the combustion gas side end surface on the inner peripheral side.

Since the other constitution and function are the same as those in the first embodiment, the same characters denote the same constituents and an explanation therefor is omitted.

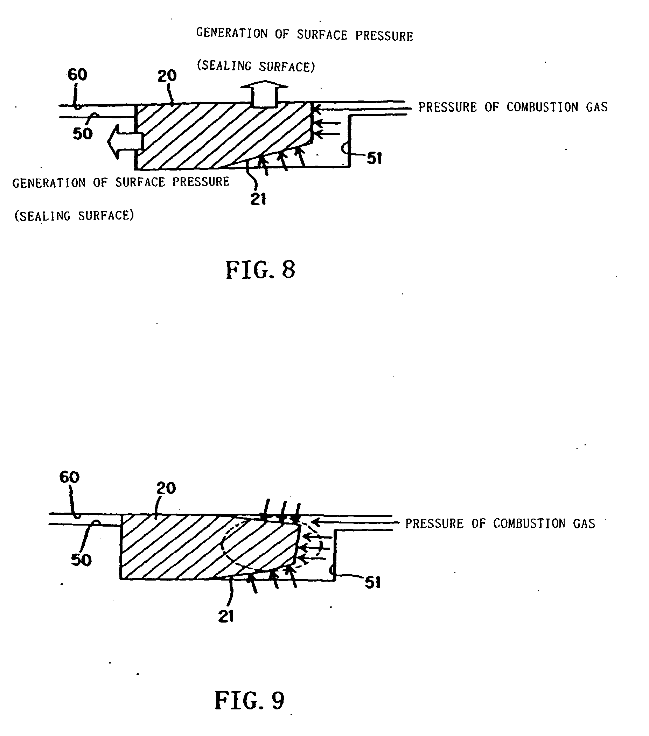

In the case where the tapered surface is provided on an entire periphery of an inner-peripheral side end edge of the end surface on the combustion gas side as in the third embodiment, pressure of a combustion gas acts on the combustion gas side end surface and the tapered surface 21 of the combustion gas seal for injectors as shown in Fig. 8, so that surface pressures are generated on a side of the attachment groove 51 of the injector 50 opposed to the combustion gas side and on the inner peripheral surface of the cylinder head 60 to form sealing surfaces.

When the tapered surface is provided over the entire periphery of the end edge of the combustion gas side end surface on the inner peripheral side, however, insufficient rigidity may cause deformation, as shown in Fig. 9, due to deformation at the time of assembly, waviness of a mating surface, waviness of the gas seal itself, or the like.

In the case where such deformation as shown in Fig. 9 is caused, gas pressure acts on a side of an outer peripheral surface, so that gas pressure on the tapered surface and gas pressure on the side of the outer peripheral surface cancel each other, it being conceivable that any adequate surface pressure cannot be generated on the side of the outer peripheral surface, which should form a sealing surface, thus leading to degradation in sealing performance.

Hereupon, the embodiment provides a configuration, in which a tapered surface is not provided over the entire periphery but a plurality of tapered surfaces is provided at intervals.

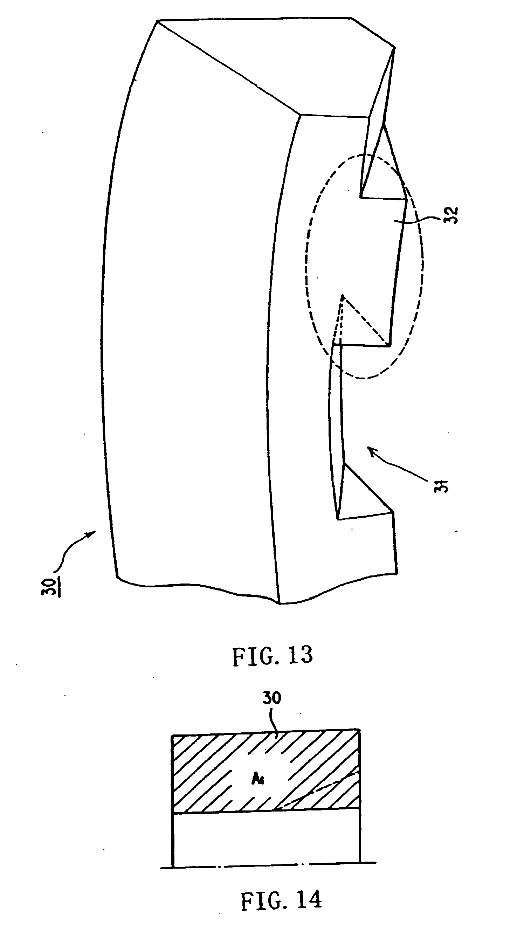

Fig. 10 is a bottom view showing a combustion gas seal for injectors, according to a fourth embodiment of the invention. Fig. 11 is a cross sectional view taken along the line aa' in Fig. 10. Fig. 12 is a schematic, cross sectional view showing a mating structure (a construction of an injector and a cylinder head), to which the combustion gas seal for injectors, according to the embodiment of the invention, is mounted. Fig. 13 is a fragmentary, perspective view showing the combustion gas seal for injectors, according to the fourth embodiment of the invention.

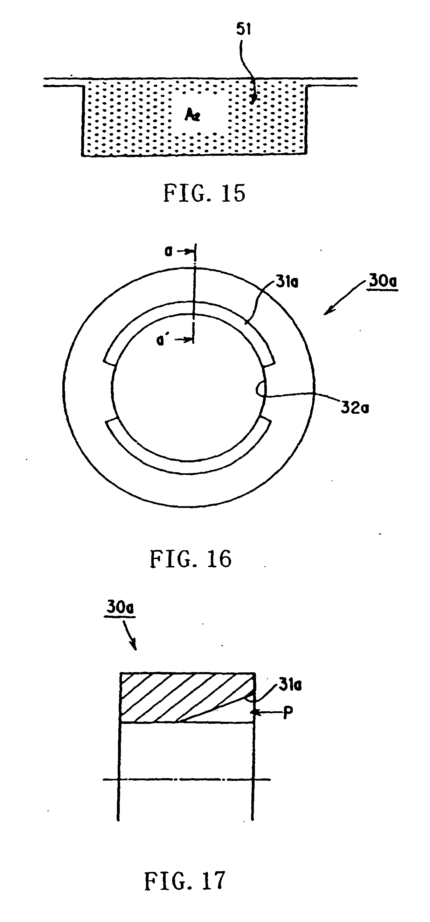

Also, Figs. 14 and 15 are views illustrating the area relationships among respective portions in a attach portion, Fig. 14 being a schematic, cross sectional view showing the combustion gas seal for injectors, according to the fourth embodiment of the invention, and Fig. 15 being a schematic, cross sectional view showing the mount portion.

Also, Fig. 16 shows an example of a modified configuration of the combustion gas seal for injectors, according to the embodiment, and Fig. 17 is a cross sectional view taken along the line aa' in Fig. 16.

As shown in Fig. 10 or Fig. 13, the combustion gas seal 30 for injectors, according to the embodiment, is provided with a plurality of tapered surfaces 31 at intervals in the circumferential direction of an end edge of a combustion gas side end surface on an inner peripheral side. In addition, the tapered surfaces 31 are placed at equal intervals in eight locations in the example shown in Fig. 10.

There may be adopted a configuration in which those portions, on which the tapered surfaces 31 are not provided, serve as stoppers 32.

That is, not only the provision of those portions, on which the tapered surfaces 31 are not provided, increases rigidity but also the portions abut against the groove bottom surface of the attachment groove 51 of the injector 50 to function as the stoppers 32 for prevention of deformation toward the inner peripheral side.

As described above, deformation as shown in Fig. 9 can be prevented by providing the plurality of tapered surfaces 31 at intervals in the circumferential direction of the end edge of the combustion gas side end surface on the inner peripheral side and causing those portions, on which the tapered surfaces 31 are not provided, to function as the stoppers 32.

Thereby, a more stable sealing performance can be maintained by preventing abnormal deformation in addition to the effect produced in the above third embodiment.

Subsequently, an explanation will be given to dimensions of respective parts, or the like, referring to Figs. 11 and 12.

As shown in Fig. 11, α denotes a taper angle of the tapered surfaces 31, b denotes a depth of grooves formed by the tapered surfaces 31, a denotes a thickness of the combustion gas seal 30 for injectors, and c denotes a width of the combustion gas seal 30 for injectors.

Also, as shown in Fig. 12, e denotes a groove width of the attachment groove 51 of the injector 50, and h denotes a distance from the groove bottom of the attachment groove 51 of the injector 50 to the inner peripheral surface of the cylinder head 60.

In this case, the taper angle α is 0 to 90 °, preferably 5 to 45 °, and more preferably 5 to 25 °.

Also, the thickness a of the combustion gas seal 30 for injectors meets a > h, and preferably a ≥ (h + 0.05) mm.

Also, the depth b of the grooves suffices to meet a > b.

Also, the width c of the combustion gas seal 30 for injectors meets e > c, and preferably e × 0.9 ≥ c.

Subsequently, an explanation will be given to a filling rate referring to Figs. 14 and 15.

With the combustion gas seal for injectors, according to the embodiment of the invention, the filling rate for the attach portion is set to be at most 100 %.

That is, where A1 denotes an area (a cross sectional area in a state, in which compression or the like is not effected prior to attaching) of a cross section (a cross section of those portions, on which the tapered surfaces are not provided) of the combustion gas seal for injectors, as shown in Fig. 14, and A2 denotes an area of a cross section of annular gap portion defined by the attachment groove 51 of the injector 50 and the inner peripheral surface of the cylinder head 60, as shown in Fig. 15, A1 ÷ A2 ≤ 1 is set to be established.

Subsequently, an explanation will be given to an example of a modified configuration referring to Figs. 16 and 17.

While the provision of a multiplicity (eight) of tapered surfaces is shown in the example of Fig. 10, what is essential is that abnormal deformation is not caused taking account of materials for the seal, conditions of use, or the like.

Accordingly, there may be adopted a configuration, in which tapered surfaces 31a are formed only in two locations and stoppers 32a are also formed only in two locations as in a combustion gas seal 30a for injectors, shown in Figs. 16 and 17.

### INDUSTRIAL APPLICABILITY

As described above, since the combustion gas seal for injectors, according to the invention, is formed from a resin, it is possible to prevent generation of noise to achieve an improvement in sound insulation effect. Also, since the combustion gas seal for injectors, according to the invention, is subjected to pressure of a combustion gas to enable increasing surface pressures on mating members (an injector and a cylinder head), a stable sealing performance is exhibited over a long term to improve a sealing performance.

When the combustion gas seal for injectors, according to the invention, is formed from a resin material having a thermal resistance of 200 °C, deterioration can be prevented even in use at high temperatures.

When a groove opened toward a combustion gas side is provided over an entire periphery of a combustion gas side end surface of the combustion gas seal for injectors, according to the invention, the sealing performance can be further improved.

The sealing performance can be further improved also by providing a tapered surface over an entire periphery of an inner-peripheral side end edge of a combustion gas side end surface of the combustion gas seal for injectors, according to the invention.

When a plurality of tapered surfaces are provided at intervals in the circumferential direction of an inner-peripheral side end edge of a combustion gas side end surface of the combustion gas seal for injectors, according to the invention, the sealing performance can be further improved and stabilized since abnormal deformation can be prevented.

## Claims

1. A combustion gas seal (20; 30) for injectors, formed from a resin and attached in a attachment groove (51) provided in an injector (50), which is to be mounted on a cylinder head (60) of an engine, to seal an annular gap between the cylinder head (60) and the injector (50), wherein an inner diameter prior to compressive deformation is set to be smaller than an outer diameter of the attachment groove (51) and an outer diameter prior to compressive deformation is set to be larger than an inner diameter of a seal abutment of the cylinder head (60), and that an entire end surface on a combustion gas side is arranged to be exposed to a combustion gas,
**characterized in that**
a tapered surface (21; 31) is provided on a periphery of an inner peripheral side end edge of the end surface on the combustion gas side.

2. The combustion gas seal (20; 30) for injectors, according to claim 1, wherein the seal is formed from a resin material having a thermal resistance of at least 200°C.

3. The combustion gas seal (20; 30) for injectors, according to claim 1 or 2, wherein a groove (11) is provided on an entire periphery of the end surface on the combustion gas side to be opened to the combustion gas side.

4. The combustion gas seal (20; 30) for injectors, according to claim 1 or 2, wherein the tapered surface is provided on an entire periphery of the inner peripheral side end edge.

5. The combustion gas seal (20; 30) for injectors, according to claim 1 or 2, wherein the tapered surface is interrupted such that a plurality of tapered surfaces (31) are provided at intervals in the circumferential direction of the inner peripheral side end edge of the end surface on the combustion gas side.

6. The combustion gas seal (20; 30) for injectors, according to claim 5, wherein inner peripheral surfaces of those portions, on which the tapered surfaces (31) are not provided, abut against a groove bottom surface of the attachment groove (51).

## Patentansprüche

1. Verbrennungsgasabdichtung (20; 30) für Einspritzvorrichtungen, die aus einem Harz ausgebildet ist und in einer Befestigungsnut (51) befestigt ist, die in einer Einspritzvorrichtung (50) vorgesehen ist, die an einen Zylinderkopf (60) eines Motors montiert werden soll, um einen ringförmigen Zwischenraum zwischen dem Zylinderkopf (60) und der Einspritzvorrichtung (50) abzudichten, wobei ein Innendurchmesser vor der Druckverformung so festgelegt ist, dass er kleiner als ein Außendurchmesser der Befestigungsnut (51) ist, und ein Aussendruchmesser vor der Druckverformung so festgelegt ist, dass er größer als ein Innendurchmesser einer Abdichtungsanlage des Zylinderkopfs (60) ist, und dass eine gesamte Endfläche an einer Verbrennungsgasseite so angeordnet ist, dass sie einem Verbrennungsgas ausgesetzt ist,
**dadurch gekennzeichnet, dass**
eine abgeschrägte Fläche (21; 31) an einem Umfang einer inneren Umfangsseitenendkante der Endfläche an der Verbrennungsgasseite vorgesehen ist.

2. Verbrennungsgasabdichtung (20; 30) für Einspritzvorrichtungen gemäß Anspruch 1, wobei die Abdichtung aus einem Harzmaterial ausgebildet ist, das eine Temperaturfestigkeit von mindestens 200 °C hat.

3. Verbrennungsgasabdichtung (20; 30) für Einspritzvorrichtungen gemäß Anspruch 1 oder 2, wobei eine Nut (11) an einem gesamten Umfang der Endfläche an der Verbrennungsgasseite so vorgesehen ist, dass sie sich zur Verbrennungsgasseite hin öffnet.

4. Verbrennungsgasabdichtung (20; 30) für Einspritzvorrichtungen gemäß Anspruch 1 oder 2, wobei die abgeschrägte Fläche an einem gesamten Umfang der inneren Umfangsseitenendkante vorgesehen ist.

5. Verbrennungsgasabdichtung (20; 30) für Einspritzvorrichtungen gemäß Anspruch 1 oder 2, wobei die abgeschrägte Fläche in der Art unterbrochen ist, dass eine Vielzahl von abgeschrägten Flächen (31) in Abständen in der umlaufenden Richtung der inneren Umfangsseitenendkante der Endfläche an der Verbrennungsgasseite vorgesehen ist.

6. Verbrennungsgasabdichtung (20; 30) für Einspritzvorrichtungen gemäß Anspruch 5, wobei innere Umfangsflächen der Abschnitte, an denen die abgeschrägten Flächen (31) nicht vorgesehen sind, an einer Nutbodenfläche der Befestigungsnut (51) anliegen.

## Revendications

1. Joint étanche aux gaz de combustion (20 ; 30) destiné à des injecteurs, formé à partir d'une résine et fixé dans une rainure de fixation (51) prévue dans un injecteur (50), qui est prévu pour être monté sur une culasse (60) d'un moteur, pour sceller un intervalle annulaire entre la culasse (60) et l'injecteur (50), dans lequel un diamètre interne avant déformation compressive est prévu pour être plus petit qu'un diamètre externe de la rainure de fixation (51) et un diamètre externe avant déformation compressive est prévu pour être plus grand qu'un diamètre interne d'une butée de joint de la culasse (60), et dans lequel une surface d'extrémité entière du côté des gaz de combustion est agencée pour être exposée aux gaz de combustion,
**caractérisé en ce que**
une surface conique (21 ; 31) est prévue sur une périphérie d'un bord d'extrémité de côté périphérique interne de la surface d'extrémité du côté des gaz de combustion.

2. Joint étanche aux gaz de combustion (20 ; 30) destiné à des injecteurs, selon la revendication 1, dans lequel le joint est formé à partir d'un matériau résine ayant une résistance thermique d'au moins 200 °C.

3. Joint étanche aux gaz de combustion (20 ; 30) destiné à des injecteurs, selon la revendication 1 ou 2, dans lequel une rainure (11) est prévue sur une périphérie entière de la surface d'extrémité du côté des gaz de combustion pour être ouverte vers le côté des gaz de combustion.

4. Joint étanche aux gaz de combustion (20 ; 30) destiné à des injecteurs, selon la revendication 1 ou 2, dans lequel la surface conique est prévue sur une périphérie entière du bord d'extrémité de côté périphérique interne.

5. Joint étanche aux gaz de combustion (20 ; 30) destiné à des injecteurs, selon la revendication 1 ou 2, dans lequel la surface conique est interrompue de telle sorte qu'une pluralité de surfaces coniques (31) est prévue à des intervalles dans la direction circonférentielle du bord d'extrémité de côté périphérique interne de la surface d'extrémité du côté des gaz de combustion.

6. Joint étanche aux gaz de combustion (20 ; 30) destiné à des injecteurs, selon la revendication 5, dans lequel les surfaces périphériques internes de ces parties, sur lesquelles les surfaces coniques (31) ne sont pas prévues, butent contre une surface inférieure de rainure de la rainure de fixation (51).
